# EUROPÄISCHE PATENTSCHRIFT

(11) **EP 0 405 075 B1**
(45) Veröffentlichungstag und Bekanntmachung des Hinweises auf die Patenterteilung: **16.06.1993**
(21) Anmeldenummer: 90106907.0
(22) Anmeldetag: 10.04.1990
(51) Int. Cl.: B08B 9/04

(54) **Rohrleitungsmolch**
Pipeline pig
Racleur pour conduite

(30) Priorität: 27.06.1989 DE 3920981
(43) Veröffentlichungstag der Anmeldung: 02.01.1991
(73) Patentinhaber: I.S.T. MOLCHTECHNIK GMBH, 20355 Hamburg (DE)
(72) Erfinder: Skibowski, Hubert, D-2000 Hamburg 73 (DE)
(74) Vertreter: Patentanwälte Hauck, Graalfs, Wehnert, Döring, Siemons

(56) Entgegenhaltungen:
- EP-A- 0 300 602
- GB-A- 1 378 831
- GB-A- 1 554 894
- US-A- 3 704 478

## Beschreibung

Die Erfindung bezieht sich auf einen Rohrleitungsmolch nach dem Oberbegriff des Patentanspruchs 1.

Aus der DE-PS 28 01 378 ist ein Rohrleitungsmolch bekanntgeworden, bei dem an einem länglichen Molchkörper in den Endbereichen jeweils eine Dichtungsanordnung vorgesehen ist. Die Dichtungsanordnung besteht aus ebenen zylindrischen Scheiben mit einer vorn befindlichen Führungsscheibe aus einem härteren elastischen Material als das einer den Dichtungsabschnitt bildende Dichtscheibe. In der Bewegungsrichtung des Rohrleitungsmolchs hinter der Dichtscheibe liegt an dieser eine Stützscheibe an, die ebenfalls aus härterem Material als die Dichtscheibe besteht und einen kleineren Durchmesser hat als die zu molchende Rohrleitung. Der Molchkörper ist üblicherweise eine Metallkonstruktion, in der die einzelnen Scheiben der Dichtungsanordnung eingespannt sind. Ein derartiger Molch ist ohne besondere Vorkehrungen für den Zweiwegbetrieb nicht geeignet. Der Zweiwegbetrieb bei zu molchenden Rohrleitungssystemen, bei dem der Molch in zwei Richtungen durch eine Rohrleitung geschickt wird, ohne daß der Molchkörper herausgenommen und gewendet wird, ist ein häufig vorkommender Anwendungsfall.

Aus der DE-PS 30 32 532 ist ein Rohrleitungsmolch bekanntgeworden, der aus einem einteiligen Molchkörper aus elastomerem Vollmaterial besteht. Ringzylindrische axial beabstandete Dichtflächen sind am Molchkörper angeformt, wobei dieser zwischen den Dichtflächen eine Einschnürung aufweist. Der Molchkörper hat auf der der Einschnürung abgewandte Seite jeweils einen Kugelabschnitt. Mit Hilfe eines derartigen Rohrleitungsmolchs können ohne Gefahr des Steckenbleibens in beiden Richtungen Rohrleitungen auch mit engen Bögen gefahren werden. Ein derartiger Rohrleitungsmolch hat sich im Betrieb außerordentlich bewährt. Als Nachteil ist jedoch anzusehen, daß der gesamte Molch fortgeworfen werden muß, wenn die Dichtflächen durch Abnutzung oder Beschädigung unbrauchbar geworden sind. Derartige Molche bestehen jedoch häufig aus relativ wertvollem Material. Eine besondere Eigenart des bekannten Rohrleitungsmolchs besteht auch darin, daß die eine Abstreifwirkung entfaltende Dichtung aus dem gleichen Material wie der Molchkörper geformt ist. Es ist aus Gründen einwandfreier Führung und eines optimalen Abstreifeffekts notwendig, dem elastomeren Material des Molchkörpers eine bestimmte Härte und einen bestimmten Durchmesser zu verleihen. Dies bedeutet, daß der Rohrleitungsmolch relativ empfindlich gegenüber Toleranzen ist, z.B. Durchmesser- und Wanddicken und Ovalitäten. Zu molchende Rohrleitungen haben jedoch häufig derartige Abweichungen sowie Unebenheiten, die beispielsweise an den Schweißnähten und Flanschverbindungen entstehen. Daher besteht häufig nur die Alternative, den Molch entweder mit hoher Vorspannung und somit schwergängig auszulegen und enge Leitungstoleranzen zu fordern oder leichtgängig und eine verminderte Abstreif- bzw. Dichtungswirkung in Kauf zu nehmen. Wird durch die Rohrleitung ein Medium gefördert, das das elastomere Material des Molchs zum Quellen bringt, besteht die Gefahr, daß der Molch immer schwergängiger wird und schließlich stecken bleibt. Dies bedeutet eine unerwünschte Störung des Förderbetriebs.

Der Erfindung liegt daher die Aufgabe zugrunde, einen Zweiwege-Rohrleitungsmolch zu schaffen, der leichtängig ist, der eine gute Anpassung an Rohrtoleranzen erlaubt und gleichwohl eine gute Abstreifwirkung aufweist.

Diese Aufgabe wird gelöst durch die Merkmale der Patentansprüche 1 und/oder 2.

Bei dem erfindungsgemäßen Rohrleitungsmolch wird die Abstreifwirkung nicht durch eine zylindrische Fläche am Molchkörper herbeigeführt, wie dies bei dem bekannten Vollkörpermolch der Fall ist, sondern durch kurzbauende ringförmig umlaufende radiale Lippen. Die Lippen sind relativ kurz im Verhältnis zum Radius des Molchkörpers.Sie sind außerdem so geformt und bemessen, daß sie beim Eingriff mit der Rohrwandung relativ scharf umgebogen werden. Die Abstreifwirkung findet daher nicht mit dem äußeren Umfang der Dichtlippe statt, sondern mit jeweils einer äußeren Kante und der zugekehrten Seitenfläche der Dichtlippe. Die Abmessungen der Dichtlippe sind ferner derart, daß sie beim Eingriff mit der Rohrwandung nicht gequetscht wird, d.h. sie soll beim Umbiegen sich nicht gegen den Molchkörper anlegen und auch nicht komprimiert werden, anstatt sich seitlich umzubiegen.

Gemäß Anspruch 1 beträgt die radiale Höhe der Dichtlippe höchstens ein Fünftel bis ein Zehntel des Radius des Molchkörpers. Vorzugsweise ist die Höhe der Dichtlippe sogar noch unter diesem Wert. Bei Nennweiten der Rohrleitung zwischen 50 und 80 mm beträgt die Lippenhöhe zwischen 3 und 5 mm, wobei die Lippenhöhe bei größeren Nennweiten nur geringfügig größer ist, beispielsweise bei einer Nennweite von 200 mm zwischen 6 und 8 mm beträgt.

Der Abstand des Molchkörpers von der Rohrleitungswandung im Bereich der Dichtlippe ist aus den obigen Gründen verhältnismäßig gering. Er ist etwa so bemessen, daß die Lippe um ihre halbe Höhe umgebogen wird.

Es ist nicht auszuschließen, daß die radialen Dichtlippen erheblichen Beanspruchungen unterworfen sind, insbesondere wenn sie über ihren Umfang nicht gleichmäßig belastet werden. Es kann daher zu einem partiellen quetschen der Dichtlippen kommen und sogar zu einem Abscheren. Daher sieht die Lösung nach Patentanspruch 2 vor, daß die radiale Dichtlippe im axialen Abstand zu einer einteilig angeformten, axial weiter außen liegenden ringförmigen Führungsfläche angeordnet ist, deren Durchmesser annähernd dem Durchmesser der Rohrleitung entspricht und der Abstand zwischen Dichtlippe und Führungsfläche mindestens so groß ist, daß die Dichtlippe beim Umbiegen nicht gegen die ringförmige Führungsfläche anstößt. Vorzugsweise ist zwischen der ringförmigen Führungsfläche und der Dichtlippe ein ringförmiger Aufnahmeraum für die umgebogene Dichtlippe gebildet. Ringförmige Dichtflächen sind auch beim bekannten aus Vollmaterial geformten eingangs beschriebenen Molchkörper vorgesehen. Sie dienen sowohl zu Führungs- als auch zu Dichtzwecken und haben notwendigerweise einen größeren Durchmesser als die Rohrleitung. Sie haben daher die vorstehend beschriebenen Nachteile. Bei der Erfindung hat die Führungsfläche im wesentlichen nur Führungseigenschaften und verhindert mithin, daß die Dichtlippe übermäßig beansprucht wird. Außerdem kann zwischen Dichtlippe und Führungsfläche ein Aufnahmeraum für die Dichtlippe gebildet werden, in den sie hineinverformt wird, so daß eine Kompression des Materials und damit die Gefahr eines Abscherens nicht gegeben ist.

Die Lippe kann anteilig am Molchkörper geformt sein, wenn dieser zum Beispiel aus einem elastomeren, jedoch verhältnismäßig harten Material besteht. Alternativ kann die Dichtlippe auch an einem Dichtungselement ausgebildet sein, das separat am Molchkörper anbringbar ist, vorzugsweise in einer ringförmig umlaufenden Nut. Hierauf wird jedoch weiter unten noch eingegangen.

Die erfindungsgemäße Ausbildung eines Rohrleitungsmolchs weist eine Reihe von Vorteilen auf. Die elastische Verformung der Lippe durch die Rohrleitungswandung erzeugt eine zentrierende Kraft, so daß der Rohrleitungsmolch zentrisch im Rohr geführt ist. Bei einer Abweichung von der zentrischen Lage wird ein Umfangsbereich der Lippe zunehmend verformt, wodurch eine zunehmende Federkraft aufgebaut wird, die den Molch wieder in seine mittige Lage zurückdrückt. Bei einer ringförmigen Dicht- und/oder Führungsfläche wird die Zentrierwirkung im wesentlichen von dieser übernommen.

Aufgrund einer raschen und hohen Lippenanfederung an die Rohrleitungswandung wird ein hervorragender Abstreifeffekt erhalten, der sich im übrigen in Abhängigkeit vom Differenzdruck selbstregelnd einstellt, d.h. bei einem höheren Differenzdruck ist auch der Abstreifeffekt höher. Andererseits ist der erforderliche Treibdruck aufgrund der verhältnismäßig kleinen Flächenberührung mit der Rohrwandung wesentlich geringer als bei bekannten Molchen. Es kann daher mit niedrigeren Treibdrücken gearbeitet werden. Dies führt zu einer Einsparung an wertvollem Treibgas und gleichzeitiger Zeiteinsparung bei Entspannungsprozessen.

Es hat sich ferner herausgestellt, daß die Standzeit des erfindungsgemäßen Molches bedeutend länger ist als bei bekannten Molchen. Der erfindungsgemäße Molch weist außerdem hervorragende Trockenlaufeigenschaften auf. Ferner ist das Losreißmoment relativ niedrig. Man erhält somit einen ruhigen Lauf des Molches und keine überhöhten Laufgeschwindigkeiten beim Losreißen an Hindernissen.

Die federnden Lippen des erfindungsgemäßen Molches wischen auch kleine Vertiefungen wie Nuten, Rillen, Bohrungsabsätze und ähnliches aus. Die Lippen des erfindungsgemäßen Molches können sehr schnell auffedern und sich daher auch an Ovalitäten oder anderen Hindernissen schnell anpassen.

Die Lage des erfindungsgemäßen Molches in einer Endstation ist stabil, da bei einer Umkehr der Laufrichtung die Lippen gewendet werden müssen. Hierfür ist ein gegenüber dem normalen Treibdruck erhöhter Anfangsdruck notwendig. Die stabile Endlage des Molches ist wichtig, weil es durch Turbulenzen oder andere Erscheinungen zu Unterdrücken kommen kann, die versuchen, den Molch aus der Endlage herauszuziehen. Andererseits ist die notwendige Druckerhöhung zum Wenden der Lippen nicht so groß, daß sie nicht ohne weiteres bereitgestellt werden kann.

Der erfindungsgemäße Rohrleitungsmolch besitzt ebenfalls einen im wesentlichen massiven Molchkörper, vorzugsweise aus elastomerem Material. Seine Länge ist so bemessen, daß der Abstand der Dichtlippe gleich oder kleiner ist als der Innendurchmesser der Rohrleitung. Wahlweise kann jedoch auch plastisches Material verwendet werden. Das Material des Molchkörpers wird danach gewählt, welche Eigenschaften das zu molchende Produkt erfordert. Werden separate Dichtungselemente vorgesehen, braucht der Werkstoff des Molchkörpers keine Dichtungseigenschaften aufzuweisen.

Nach einer Ausgestaltung der Erfindung besitzt der Molchkörper in den Endbereichen jeweils mindestens eine Ringnut, in der separate ringförmige Dichtungselemente angeordnet sind. Die Ringdichtungselemente sind vorzugsweise lösbar angebracht, so daß sie bei Verschleiß, Beschädigung usw. herausgenommen und durch andere ersetzt werden können. Bei Undichtwerden muß daher nicht mehr der gesamte Molchkörper, der unter Umständen aus relativ wertvollem Material besteht und mit Magneten bestückt ist, fortgeworfen werden.

Nach einer anderen Ausgestaltung der Erfindung sind die Dichtungselemente bei der Herstellung in das Material des Molchkörpers eingebettet. Der Molchkörper wird beispielsweise im Spritzgußverfahren hergestellt. Hierbei können die Dichtungselemente mit eingegossen werden. In diesem Fall sind sie jedoch nicht auswechselbar.

Die ringförmigen Dichtungselemente bestehen vorzugsweise aus einem geeigneten elastomeren Material, können sich daher in begrenztem Umfang an Durchmesseränderungen anpassen. Wie weiter unten noch erläutert wird, können sie jedoch auch aus einem wenig oder gar nicht elastischen Material bestehen, zum Beispiel aus PTFE, wenn dies für bestimmte aggressive Medien erforderlich ist, die Elastomere sofort zerstören würden. Selbstverständlich kann auch der Molchkörper aus PTFE geformt werden, falls dies das Medium notwendig macht.

Die Ringnuten zur Aufnahme der Dichtungselemente können nach einer Ausgestaltung der Erfindung im Querschnitt rechteckig sein, wobei der Halteabschnitt der Dichtungselemente eine entsprechende Querschnittskontur aufweist. Die Innenseite des Dichtungsrings kann eine umlaufende Hohlkehle aufweisen, die ein genaues Einpassen in die Nut gewährleistet sowie ein gewisses radiales Nachgeben des Halteabschnitts bei einem radial nach einwärts gerichteten Druck. Alternativ können die Ringnuten einen Hinterschnitt aufweisen, um den Dichtungsring sicher zu halten.

Die Dichtungselemente können in die Ringnuten eingeklebt werden, bleiben jedoch lösbar. Alternativ kann ein ringförmiges Befestigungselement, beispielsweise ein Band aus Stahl oder Kunststoff, in einer umlaufenden Ringnut des Dichtungselements eingelegt werden, um dieses sicher am Molchkörper zu fixieren. Anstelle eines Hinterschnitts können ringförmige Befestigungselemente in Nuten an den Stirnseiten der Dichtungsringe sitzen, welche mit entsprechenden Nuten in der Nutwandung im Molchkörper zusammenwirken. Schließlich können an der Innenseite der Dichtungsringe ein oder mehrere Schweißdrähte angeordnet werden, um den Dichtungsring durch Erwärmen, zum Beispiel mittels elektrischem Strom des elastomeren Materials zum Schmelzen zu bringen und damit mit dem Molchkörper durch Vulkanisation zu verbinden. Eine andere Alternative besteht erfindungsgemäß darin, daß das ringförmige Dichtungselement an der Innenseite eine ringförmige Ausnehmung aufweist, die über mindestens einen Kanal mit der oberhalb des Molchkörpers liegenden Außenseite des Dichtungselements in Verbindung steht. Über den Kanal kann zum Beispiel Epoxidharz eingespritzt werden, das die Ringnut des Molchkörpers ausfüllt, darin aushärtet und das Dichtungselement in der Nut festhält.

Die ringförmigen Dichtungselemente können als einteilige Ringe geformt sein. Alternativ können sie auch aus Strangmaterial geformt werden, von dem Abschnitte abgetrennt werden, die anschließend auf Stoß oder mit überlappenden Enden in Ringform gebracht werden. Zu diesem Zweck kann mit der Innenseite des Dichtungselements ein Stahlband, vorzugsweise aus unmagnetischem Stahl, verbunden sein, beispielsweise durch Verklebung oder durch Vulkanisation.

Alternativ können auch lediglich Dichtungsscheiben verwendet werden, die in der Nut des Molchkörpers angeordnet sind. Um derartige Dichtungsscheiben im Molchkörper zu verankern, sieht eine Ausgestaltung der Erfindung vor, daß zwischen zwei benachbarten Ringscheiben eine Sicherungsnut im Molchkörper vorgesehen ist, die ein ringförmiges Sicherungselement aufnimmt. Die Nut ist mit einem radial einwärts sich verjüngenden Querschnitt versehen, so daß das unter Spannung stehende Sicherungselement das Material des Molchkörpers seitlich verdrängt und dadurch die Dichtungsscheiben fest im Molchkörper einspannt.

Wird aus den genannten Gründen das Dichtungselement zum Beispiel aus PTFE hergestellt, das weitgehend unelastisch ist, kann erfindungsgemäß ein Federelement vorgesehen werden, das dem Dichtungselement die notwendige Federwirkung verleiht. Das Federelement kann zum Beispiel in eine Nut des Dichtungselements eingelegt werden und mit dem Dichtungsabschnitt so zusammenwirken, daß eine ausreichende Vorspannung bereitgestellt wird. Alternativ kann das Federelement auch in das Material des Dichtungselements eingearbeitet sein.

In manchen Fällen ist erwünscht, daß Treibmedium am Molch entlangströmt. Für diesen Fall kann in dem Dichtungselement mindestens eine radiale Aussparung vorgesehen werden, deren Querschnitt die Menge hindurchströmenden Treibmediums pro Zeiteinheit bestimmt. Alternativ kann auch ein bürstenartiges Dichtungselement verwendet werden. Das Bürstenelement dient auch Reinigungszwecken, wobei die Borsten aus natürlichem oder synthetischem Material bestehen können.

Es wurde bereits erwähnt, daß der Molchkörper einteilig aus Kunststoff oder Metall geformt sein kann. Alternativ kann er auch mehrteilig gebildet werden, zum Beispiel aus zwei rotationssymmetrischen Endteilen, die mit einem Mittelteil zusammenwirken, um eine einfache Montage und Aufnahme der Dichtungselemente zu ermöglichen.

Um einen Molch in einer Rohrleitung aufzufinden, wird er mit einem Permanentmagneten ausgestattet, dessen Magnetfeld von einem Magnetfelddetektor erfaßt wird, beispielsweise in einer Molchstation. So kann ein zylindrischer Permanentmagnet zentrisch im Molchkörper anzuordnen. Das Magnetfeld nimmt bekanntlich mit dem Quadrat der Entfernung von den Polen ab. Bei größeren Durchmessern ist die Entfernung des Permanentmagneten bis zu einem Detektor in der Rohrleitungswandung beträchtlich. Daher ist entweder ein feinfühliger dafür störanfälliger Detektor notwendig oder ein verhältnismäßig großer Permanentmagnet, damit die ausreichende magnetische Feldstärke erzeugt wird. Bei einer anderen Ausgestaltung der Erfindung wird hingegen mindestens ein Permanentmagnet in einer Ausnehmung im Boden der das Dichtungselement aufnehmenden Ringnut angeordnet. Vorzugsweise wird eine Reihe von Permanentmagneten, die in Umfangsrichtung beabstandet sind, vorgesehen. Die Anordnung der Permanentmagneten in der beschriebenen Weise hat den Vorteil, daß sie einfach angebracht werden können. Ein Einformen in das Material des Molchkörpers bei seiner Herstellung ist nicht erforderlich, kann jedoch nach einer Ausgestaltung der Erfindung ebenfalls durchgeführt werden. Ferner wird relativ nahe der Peripherie des Molchkörpers ein Magnetfeld erhalten, so daß die Magneten selbst verhältnismäßig klein sein können.

Ausführungsbeispiele der Erfindung werden nachfolgend anhand von Zeichnungen näher erläutert.
- Fig. 1: zeigt einen Längsschnitt durch einen Rohrleitungsmolch nach der Erfindung.
- Fig. 2: zeigt einen Schnitt durch die Darstellung nach Fig. 1 entlang der Linie 2-2.
- Fign. 3 bis 19: zeigen verschiedene Ausführungsformen für Dichtungselemente eines Rohrleitungsmolchs nach der Erfindung.
- Fig. 20: zeigt teilweise im Längsschnitt eine alternative Ausführungsform eines Rohrleitungsmolchs nach der Erfindung.
- Fig. 21: zeigt alternative Ausführungsformen für ein Dichtungselement für einen Rohrleitungsmolch nach Fig. 20.
- Fig. 22: zeigt einen Teil eines erfindungsgemäßen Rohrleitungsmolchs sowohl im entspannten als auch im umgebogenen Zustand einer Abstreiflippe.
- Fig. 23: zeigt eine ähnliche Darstellung wie Fig. 22, jedoch im Augenblick des Umwendens der Abstreiflippe.
- Fig. 24: zeigt eine weitere Ausführungsform eines Rohrleitungsmolchs nach der Erfindung.

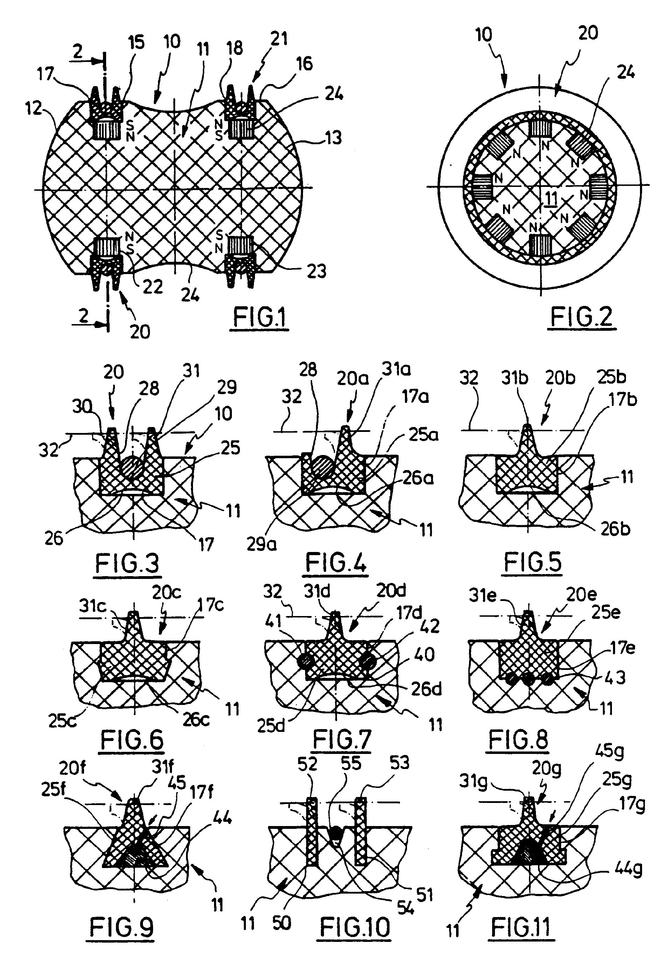

In den Figuren 1 und 2 ist ein Rohrleitungsmolch 10 dargestellt, der einen einteiligen Molchkörper 11 aus elastomerem Material aufweist. Der Molchkörper entspricht in seiner Kontur im wesentlichen dem Rohrleitungsmolch nach der DE-PS 30 32 532; er besitzt zwei spiegelbildlich angeordnete koaxiale Kugelabschnitte 12, 13 sowie eine mittlere Einschnürung 14. Der kleinste Durchmesser der Einschnürung 14 ist so gewählt, daß kleinste Rohrbögen ohne Wandberührung durch den Steg des Molchkörpers 11 durchfahren werden können. Der kleinste Durchmesser kann zum Beispiel nur wenig kleiner sein als der, der ein Durchfahren kleinster Rohrbögen gerade noch ohne Wandberührung gewährleistet. Zwischen Einschnürung 14 und den Kugelabschnitten 12, 13 befinden sich zylindrische Abschnitte 15, 16. In den zylindrischen Abschnitten 15, 16 sind Ringnuten 17, 18 geformt, die rechteckigen Querschnitt aufweisen. Der Mittenabstand der Ringnuten 17, 18 ist zum Beispiel in der Regel kleiner als der Innendurchmesser der zu molchenden Rohrleitung. In den Ringnuten 17, 18 liegen ringförmige Dichtungselemente 20, 21, deren Aufbau nachfolgend anhand von Fig. 3 näher beschrieben werden soll. In den Ringnuten sind außerdem in Umfangsabständen Ausnehmungen 22, 23 geformt, in denen Permanentmagneten 24 oder andere detektierbare Werkstoffe angeordnet sind. Die Permanentmagneten 24 unterhalb des Dichtungselements 20 sind so gerichtet, daß der Nordpol radial innen liegt, während bei den anderen Permanentmagneten es sich umgekehrt verhält. Dadurch erstrecken sich Feldlinien innerhalb und außerhalb des Molchkörpers 11 von der einen Permanentmagnetreihe zur anderen. Das Feld wird dazu benutzt, einen in der Rohrleitungswandung angeordneten Detektor zu erregen, der somit die Anwesenheit eines Molches bzw. sein Passieren durch die Rohrleitung anzeigen kann.

Wie insbesondere aus Fig. 3 hervorgeht, besitzen die Dichtungselemente 20, 21 einen dem Querschnitt der Nut 17 angepaßten Halteabschnitt 25, der an der Innenseite eine schwache Hohlkehle 26 aufweist. An der radial äußeren Seite besitzt er eine Ringnut 28, in der ein im Querschnitt kreisförmiges,ringförmiges Befestigungselement 29 angeordnet ist, beispielsweise ein Kunststoff- oder Stahlband, ein Cord aus Stahl oder Kunststoffmaterial usw. Es hat die Aufgabe, das ringförmige Dichtungselement 20 radial in der Nut 17 zu halten. Beidseits der Nut sind zwei axial beabstandete radiale Dichtlippen 30, 31 geformt. Sie sind im Querschnitt trapezförmig und verjüngen sich radial nach außen. Wahlweise können sie sich auch radial nach innen verjüngen oder die Seiten verlaufen parallel. Bei ihrem Eingriff mit der Rohrleitungswandung, die bei 32 gestrichelt dargestellt ist, werden die Dichtlippen 30, 31 annähernd um 90° umgebogen. Da die Dichtungselemente 20, 21 aus elastomerem Material bestehen, kann der Molch 10 in beiden Richtungen betrieben werden, wobei bei einer Richtungsumkehr die Dichtlippen 30, 31 umgewendet werden, um den Vorschub in die neue Richtung zu ermöglichen.

In den Figuren 4 bis 19 sind Modifikationen der Ringnuten im Molchkörper 11 bzw. der Dichtungselemente dargestellt. Sie werden mit gleichen Bezugszeichen wie in den Figuren 1 bis 3 bezeichnet, denen jedoch ein Buchstabe hinzugefügt ist. Der Molchkörper bleibt stets der gleiche, trägt daher das Bezugszeichen 11.

In einer im Querschnitt rechteckigen oder leicht konischen ringförmigen Nut 17a sitzt ein Dichtungselement 20a, das einen Halteabschnitt 25a ähnlich dem nach Fig. 3 aufweist, an dem jedoch nur eine einzige Dichtungslippe 31a angeformt ist, die in der Kontur der Dichtlippe 30 bzw. 31 nach Fig. 3 gleicht.

In einer Ringnut 28a sitzt ein ringförmiges Befestigungselement 29a ähnlich dem nach Fig. 3. Wie strichpunktiert angedeutet, wird die Dichtlippe 31a ähnlich um- bzw. abgebogen wie die Dichtlippen 30, 31a.

Bei dem Dichtungselement 20b nach Fig. 5 ist der Aufnahmeabschnitt 25b im wesentlichen rechteckig, weist jedoch wieder an der Innenseite die Hohlkehle 26b auf. Mittig an den Aufnahmeabschnitt 25b ist eine einzige im Querschnitt trapezförmige Dichtlippe 31b angeformt, die umbiegend mit der Rohrleitungswandung 32 in Eingriff gelangt. Das Dichtungselement 20b ist zum Beispiel in die Nut 17b eingeklebt.

Das Dichtungselement 20c ähnelt dem Dichtungselement 20b, hat jedoch im inneren Bereich des Aufnahmeabschnitts 25c eine im Querschnitt schwalbenschwanzförmige Kontur, wobei die Nut 17c entsprechend geformt ist. Dadurch sitzt das Dichtungselement 20c mit Hinterschnitt in der Nut 17c, und ist daher sicher in dieser enthalten.

Bei der Ausführungsform nach Fig. 7 ist das Dichtungselement 20d wiederum ähnlich wie das nach Fig. 5 bzw. Fig. 6 geformt. Der Halteabschnitt 25d weist jedoch an den Stirnseiten jeweils im Querschnitt halbkreisförmige Ringnuten 40 auf, in denen ringförmige Befestigungselemente 41 sitzen, die wiederum in im Querschnitt halbkreisförmigen Ringnuten 42 in den Wänden der Ringnut 17d sitzen. Auf diese Weise ist das Dichtungselement 20d ebenfalls wirksam in der Ringnut 17d verankert.

Das ringförmige Dichtungselement 20e nach Fig. 8 gleicht weitgehend dem nach Fig. 5. Vor dem Einsetzen in die Ringnut 17e sind nebeneinander und im axialen Abstand drei elektrisch leitende Drähte 43 eingelegt, in denen, beispielsweise durch Induktion, ein Strom erzeugt wird, wodurch sie in das elastomere Material des Dichtungselements 20e bzw. des Molchkörpers 11 einvulkanisiert werden. Die feste Haftung am Draht verhindert ein Herausreißen des Dichtungselements 20e.

Bei der Ausführungsform nach Fig. 9 ist eine im Querschnitt trapezförmige Nut 17f vorgesehen, die sich radial nach außen verjüngt. Der Halteabschnitt 25f des Dichtungselements 20f ist entsprechend geformt. Die Dichtlippe 31f gleicht der Dichtlippe 31e der Ausführungsform nach Fig. 8. Durch den Hinterschnitt ist das Dichtungselement 20f ebenfalls sicher in der Nut 17f gehalten. Das Dichtungselement 20f weist an der Innenseite eine ringförmige Ausnehmung 44 auf, die über eine Bohrung 45 mit einem Bereich des Dichtungselements 20f außerhalb des Molchkörpers 11 verbunden ist. Über die Bohrung 45 kann plastisches Material, beispielsweise flüssiges Epoxidharz eingespritzt werden, das anschließend in der Ausnehmung 44 aushärtet und dadurch eine innige Verbindung des Aufnahmeabschnitts 25f mit der Nut 17f erzeugt.

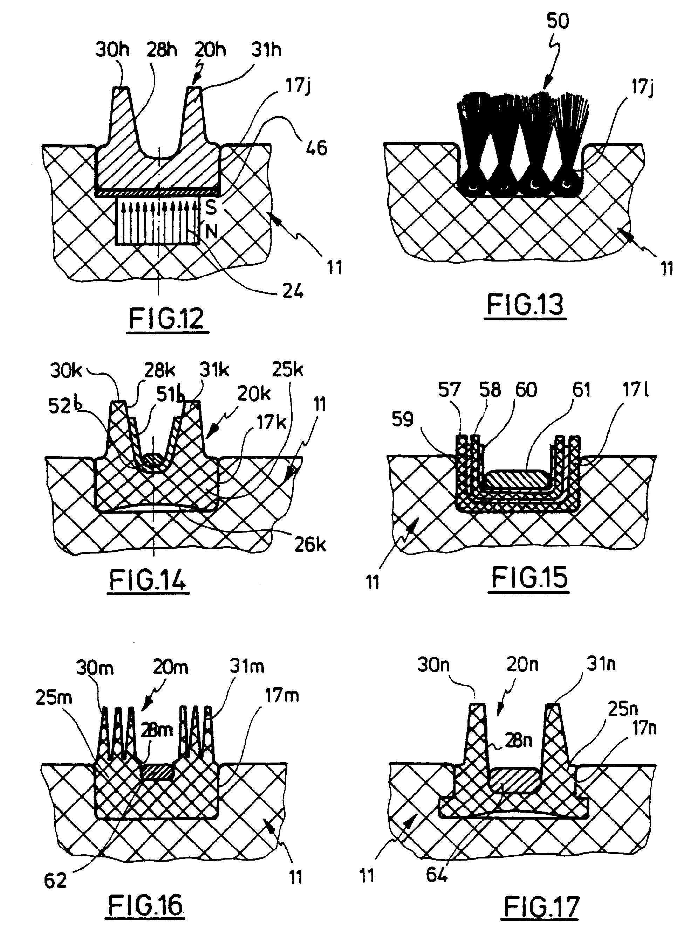

Bei der Ausführungsform nach Fig. 11 ist der Aufnahmeabschnitt 25g im Querschnitt stufenförmig, wobei die größere Breite radial weiter innen liegt, so daß der Aufnahmeabschnitt 25g in der entsprechend geformten Nut 17g formschlüssig gesichert ist. Ähnlich der Ausführungsform nach Fig. 9 ist eine ringförmige Ausnehmung 44g geformt, die wiederum über eine Bohrung 45g mit einem Bereich des Dichtungselements 20g außerhalb des Molchkörpers 11 verbunden ist zwecks Einspritzens von haftendem Kunststoffmaterial.

Bei der Ausführungsform nach Fig. 10 ist statt des einzigen Dichtungselements im einen Endbereich des Molchkörpers 11 eine Doppelanordnung verwendet. In zwei benachbarten relativ schmalen Ringnuten 50, 51 des Molchkörpers 11 sitzen Ringscheiben 52, 53. Zwischen den Ringnuten 50, 51 ist eine im Querschnitt dreieckige Ringnut 54 im Molchkörper 11 geformt, in der unter radialer Spannung ein Befestigungselement 55 sitzt. Das Befestigungselement 55 drückt das Material des Molchkörpers 11 zur Seite und klemmt dadurch die Ringscheiben 52, 53 fest.

Das Dichtungselement 20h nach Fig. 12 gleicht dem Dichtungselement 20 nach Fig. 3, so daß auf seinen Aufbau nicht näher eingegangen wird. Zusätzlich ist an der Innenseite des Dichtungselements ein Stahlband 46 angebracht, beispielsweise mit dem Dichtungselement 20h verklebt bzw. anvulkanisiert. Das Dichtungselement 20h besteht in der Ausgangsform aus Strangmaterial, das auf Länge geschnitten wird. In der Nut wird der Abschnitt auf Stoß miteinander verbunden, wobei das Stahlband 46 ebenfalls auf Stoß oder überlappend angeordnet sein kann.

Bei der Ausführungsform nach Fig. 13 sitzt in einer im Querschnitt rechteckförmigen Nut 17j eine ringförmige Bürstenanordnung 50 aus Kunststoff- oder Naturborsten. Die Bürstenanordnung 50 kann ebenfalls als Strangmaterial vorliegen, das in der Nut 17j an den Enden miteinander auf geeignete Weise verbunden wird.

Die Querschnittskontur des Dichtungselements 20k nach Fig. 14 gleicht wiederum der nach Fig. 12 oder der nach Fig. 3. Auf seinen Aufbau wird daher nicht näher eingegangen. Der Unterschied zu den genannten Ausführungsformen besteht darin, daß das Material aus PTFE besteht, mithin kein oder kaum elastisches Verhalten zeigt. Daher ist ein im Querschnitt U-förmiges Federelement 51 in die Nut 28k eingesetzt, daß durch ein Befestigungselement 52 in der Nut 28k gehalten ist. Die Schenkel des Federelements 51 verleihen den Dichtlippen 30k bzw. 31k elastisches Verhalten, wenn sie jeweils in Richtung der anderen Dichtlippe verformt werden.

In der Ausführungsform nach Fig. 15 sitzen zwei im Querschnitt U-förmige Dichtringe ineinander in der Nut 171, wobei die freien Enden der Schenkel über den Außenumfang des Molchkörpers 11 nach außen ragen. Die Dichtelemente 57, 58 sind wiederum aus PTFE geformt. Zu diesem Zweck ist zwischen den Dichtelementen 57, 58 ein im Querschnitt U-förmiges Federelement 59 angeordnet. Innerhalb des Dichtungselements 58 ist ebenfalls ein im Querschnitt U-förmiges Federelement 60 angeordnet. Die gesamte Anordnung wird durch einen Flachstreifen 61, der mit dem Steg des Federelements 60 zusammenwirkt, zusammen und in der Nut 171 gehalten. Wie erkennbar, dienen die Federelemente 59, 60 dazu, den ansonsten unelastischen Dichtelementen 57, 58 nachgebendes Verhalten zu verleihen.

Das ringförmige Dichtungselement 20m nach Fig. 11 hat einen Aufnahmeabschnitt, der zum Beispiel der Ausführungsform nach Fig. 3 gleicht. Statt zwei Dichtlippen 30, 31, wie in Fig. 3, sind zwei Anordnungen von drei Dichtlippen 30m bzw. 31m vorgesehen, wobei die Dichtlippen 30m, 31m relativ dünn und mithin flexibel sind. In einer Ringnut 28m des Aufnahmeabschnitts 25m sitzt wiederum ein ringförmiges Befestigungselement 62.

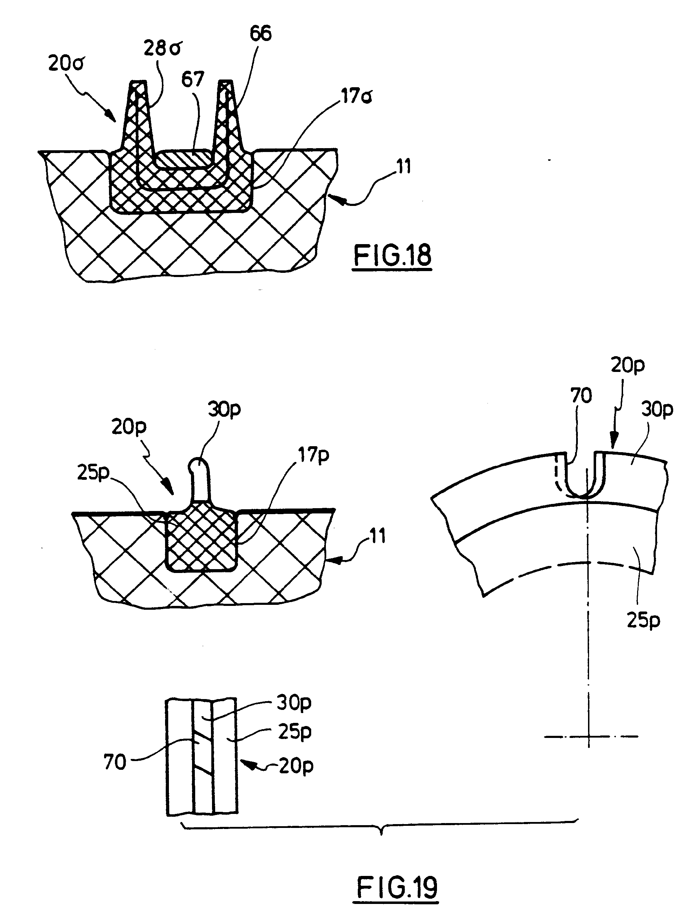

Das Dichtungselement 20n nach Fig. 17 gleicht in seinem Aufbau weitgehend dem Dichtungselement nach Fig. 11, allerdings ohne die Verklebemöglichkeit, wie sie anhand von Fig. 11 beschrieben wurde. Die Dichtlippen 30n, 31n gleichen denen zum Beispiel nach Fig. 3. In der etwas breiteren Nut 28n liegt ein flacher Befestigungsring 64, der das Dichtungselement 20n in der Nut 17n hält. Das Band oder der Ring 64 ist aus Metall. Er kann mithin die Permanentmagneten 24 ersetzen, in dem der in der Rohrleitungswandung angeordnete, nicht gezeigte Detektor auf Metall anspricht.

Das Dichtungselement 20o nach Fig. 18 gleicht in seiner Querschnittskontur weitgehend dem nach Fig. 3 oder Fig. 12 bzw. Fig. 14. Auf seinen Aufbau wird daher nicht weiter eingegangen. Im Unterschied jener Ausführungsform ist ein U-förmiges Federelement 66 in das Dichtungselement 20o eingebettet. Das Dichtungselement 20o besteht aus PTFE, so daß das Federelement 66 diesem ausreichende Federeigenschaften verleiht. Ein Befestigungsring 67 sitzt in der Nut 28o.

Das in Fig. 19 gezeigte Dichtungselement 20p gleicht in seinem Aufbau zum Beispiel dem Dichtungselement 20b nach Fig. 5. Mit diesem übereinstimmende Einzelheiten werden daher nicht erläutert. Als Besonderheit ist jedoch zu vermerken, daß die Dichtlippe 30p einen axial gesehen schrägen Durchbruch 70 aufweist. Dieser ermöglicht,daß Treibluft an der Dichtlippe 30p vorbeiströmen kann, um zum Beispiel einen in Treibrichtung strömungsabwärts angeordneten Molch vorzutreiben. Es versteht sich, daß mehrere derartiger Durchbrüche 70 in Umfangsabständen angeordnet sein können.

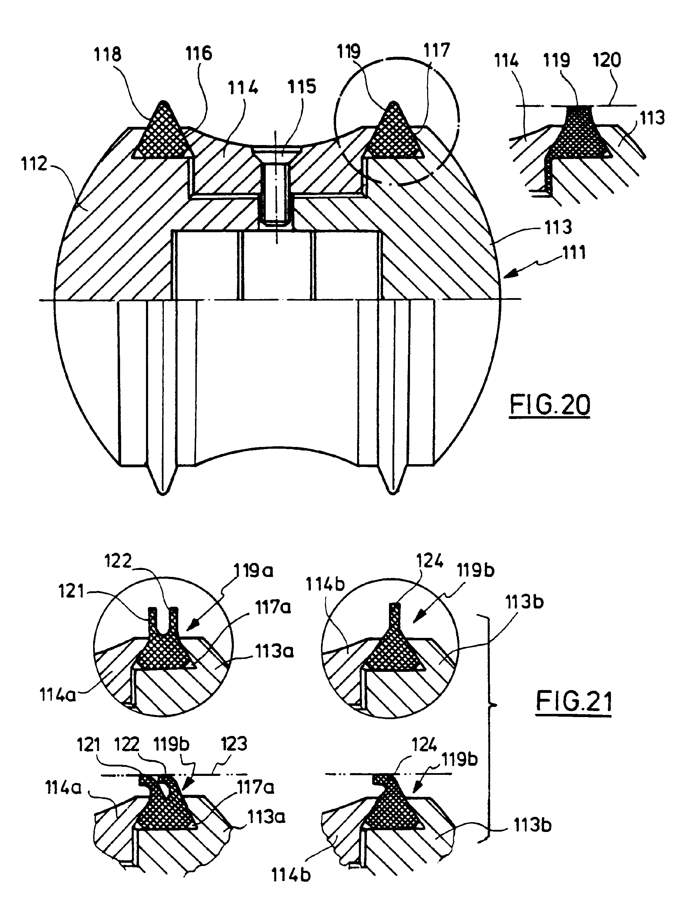

Bei der Ausführungsform nach den Figuren 20 und 21 besteht der Molchkörper 111 aus plastischem Material, zum Beispiel aus PTFE. In seiner Außenkontur entspricht er dem Molchkörper 11 nach Fig. 1. Er besteht jedoch aus drei Abschnitten, nämlich zwei Endabschnitten 112, 113, die den Kugelabschnitt des Molchkörpers 111 und einen im Durchmesser geringeren Abschnitt an der Innenseite aufweisen, wodurch eine im Querschnitt gestufte Ringnut gebildet ist, wenn die Teile 112, 113 koaxial angeordnet sind. Zwischen den Abschnitten 112, 113 ist ein Ringabschnitt 114 angeordnet, der durch mindestens eine Schraube 115 mit den Abschnitten 112, 113 verbindbar ist. Durch die genannten Teile 112, 113 und 114 sind in den Endbereichen des Molchkörpers 111 im Querschnitt trapezförmige Nuten 116 bzw. 117 gebildet, wobei die Form der Nuten etwa der der Ausführungsform nach Fig. 9 entspricht. In den Nuten 116, 117 sind entsprechend geformte dreieckige Dichtungselemente 118, 119 angeordnet, die aus elastomerem Material oder ebenfalls aus PTFE bestehen können. Wie aus der rechten Darstellung in Fig. 20 hervorgeht, wird das Material der Dichtungselemente durch die gestrichelt gezeichnete Rohrleitungswandung 120 zusammengestaucht, so daß sich eine zylindrische Dichtungsfläche ergibt.

In der Ausführungsform nach Fig. 21 sind zwei alternative Ausführungsformen für den Dichtungsabschnitt der Dichtungselemente dargestellt. In der linken oberen Darstellung nach Fig. 21 weist das Dichtungselement 119a einen Aufnahmeabschnitt auf, der dem des Dichtungselements 119 nach Fig. 20 gleicht. Der Dichtungsabschnitt besteht aus zwei scheibenartigen Dichtlippen 121, 122, deren Abstand so gewählt ist, daß bei Eingriff mit der strichpunktiert gezeichnete Rohrleitungswandung 123 sich die Dichtlippen 121, 122 nicht berühren.

In der rechten Darstellung von Fig. 21 ist das Dichtungselement 119b nur mit einer einzigen Dichtlippe 124 versehen, ähnlich den Dichtlippen 31c, 31d oder 31e in den Ausführungsformen nach den Figuren 6, 7 oder 8. Die Verformung der Dichtlippe 124 geht aus der unteren rechten Darstellung in Fig. 21 hervor.

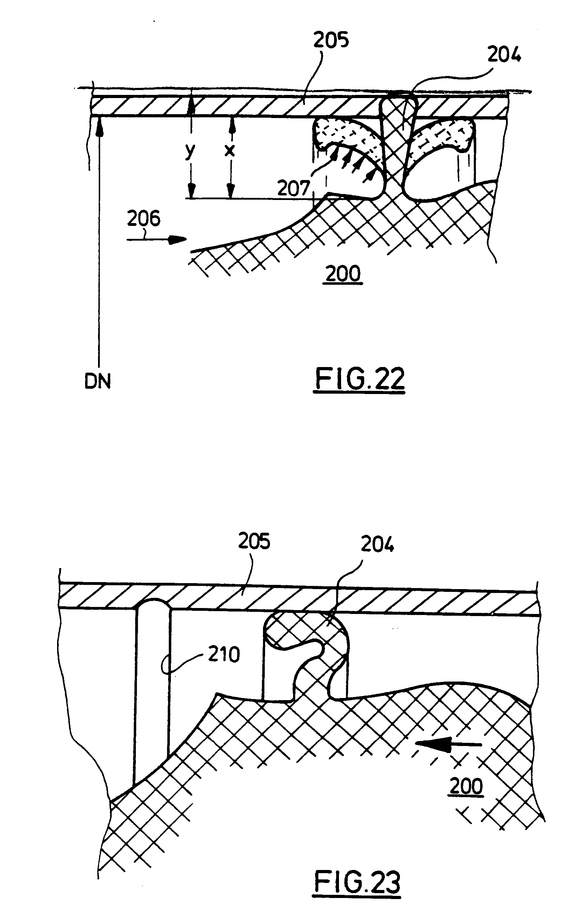

Bei den Ausführungsformen nach Fig. 22 und 23 ist ein Molchkörper 200 aus Vollmaterial angedeutet an den eine Dichtlippe 204 mit trapezförmigen Querschnitt einstückig angeformt ist. Sie verjüngt sich jedoch radial von außen nach innen. Eine Rohrleitungswandung ist bei 205 dargestellt. Die radiale Höhe der Dichtlippe 204 ist mit y bezeichnet, die auf den Betrag x reduziert wird, wenn die Dichtlippe 204 durch Eingriff mit der Rohrwandung 205 relativ scharf abgebogen wird.

Wird der Molch 200 durch ein Treibmittel in Richtung des Pfeils 206 vorbewegt, wirkt der Druck des Treibgases auch gegen die Dichtlippe 204 und drückt diese entsprechend den Pfeilen 207 gegen die Rohrleitungswandung 205, so daß der Anpreßdruck der Dichtlippe 204 an der Rohrleitungswandung 205 von der Druckdifferenz an der Dichtlippe 204 abhängt. Wird der Rohrleitungsmolch 200 in die entgegengesetzte Richtung vorgetrieben, hat die Dichtlippe eine Lage, wie sie rechts von der entspannten Dichtlippe 204 dargestellt ist.

Fig. 23 zeigt den Zustand der Dichtlippe 204 während des Wendens, wenn zum Beispiel der Rohrleitungsmolch 201 zunächst in Richtung des Pfeils 206 vorgetrieben wurde und anschließend in die umgekehrte Richtung vorbewegt wird. Das endgültige vollständige Unwenden wird durch Ringnuten oder ähnliches, wie bei 210 gezeigt, sichergestellt.

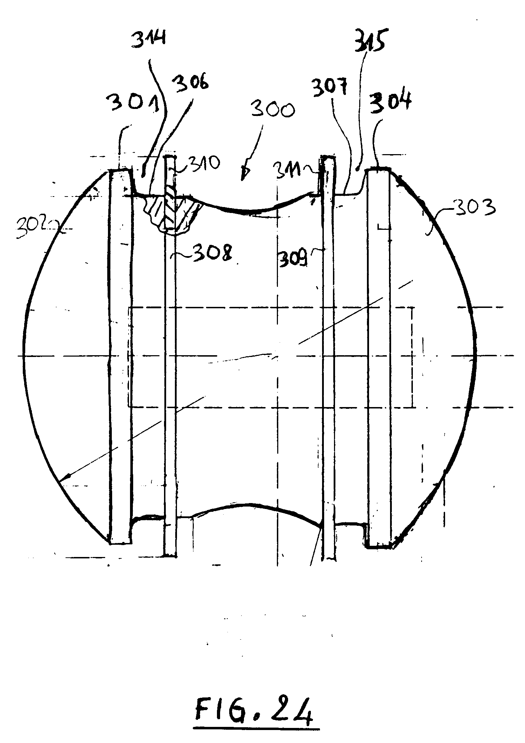

In Fig. 24 ist ein einteiliger Molchkörper 300 aus elastomerem Vollmaterial gezeigt, ähnlich dem Molchkörper 10 nach Fig. 1. Er weist kugelkappenförmige Endabschnitte 302, 303 auf, deren Radius gleich oder etwas größer ist als die halbe Länge des Molchkörpers 300. Im Anschluß an die Abschnitte 302, 303 sind zylindrische Führungsflächen 301, 304 geformt. Ihr Durchmesser entspricht annähernd dem Innendurchmesser der zu molchenden Rohrleitung. Ist das Material des Molchkörpers 100 relativ elastisch, kann der Durchmesser der Führungsflächen 301, 304 etwas größer sein als der Innendurchmesser der Rohrleitung. Ist das Material des Molchkörpers dagegen verhältnismäßig hart, wird der Durchmesser der Führungsflächen gleich oder kleiner als der Innendurchmesser der Rohrleitung gewählt. Der Abstand der ringförmigen Flächen 301, 304 ist gleich oder kleiner als der Durchmesser der Rohrleitung.

Im Anschluß an die Flächen 301, 304 ist eine zylindrische Fläche 306, 307 geformt,deren Durchmesser deutlich kleiner ist als der der Flächen 301, 304. In die zylindrischen Abschnitte 306, 307 sind scheibenförmige Dichtelemente 308, 309 angeordnet. Sie können in entsprechenden Nuten der Abschnitte 306, 307 angeordnet sein und dort beispielsweise verklebt werden. Sie können jedoch auch in das Material des Molchkörpers 300 eingebettet sein, beispielsweise beim Formen des Molchkörpers 300. Die Dichtelemente 308, 309 bilden Dichtlippen 310, 311, die radial über die zylindrischen Abschnitte 306, 307 hinausstehen. Die Höhe der Dichtlippen 310,311 ist so wie bei den vorstehend beschriebenen Ausführungsformen gewählt. Die Höhe ist etwa das 1,5-fache bis das Doppelte des Abstandes der Rohrleitungswandung vom zylindrischen Abschnitt 306 bzw. 307 (vorzugsweise das 1,6-fache). Dadurch werden, wie beschrieben, die Dichtlippen 310, 311 beim Eingriff mit der Rohrleitungswandung umgebogen, so daß eine Dichtwirkung mit der zugeordneten Kante und der Seitenfläche der Dichtlippen 310, 311 zustande kommt.

Zwischen den Führungsflächen 301, 304 und den Dichtlippen 310, 311 ist ein Aufnahmeraum 314, 315 für die sich umbiegende Dichtlippe gebildet,wobei der Abstand bzw. die Breite des Raums 314, 315 so gewählt ist, daß er die Dichtlippe 310, 311 vollständig aufnehmen kann,ohne daß die Dichtlippe 310, 311 mit benachbarten Teilen des Molchkörpers 300 in Berührung gelangt.

Die Dichtelemente 308, 309 können aus gleichem Material hergestellt sein wie der Molchkörper 301 oder aus einem unterschiedlichen. Auf jeden Fall kann als Ausgangswerkstoff ein Flachmaterial verwendet werden, was die Herstellung besonders unaufwendig macht.

## Patentansprüche

1. Rohrleitungsmolch mit einem länglichen Molchkörper (11; 111; 200) aus vorzugsweise elastomerem Vollmaterial, bei dem beidseitig eines Abschnitts mit kleinerem Durchmesser jeweils mindestens eine ringförmige Dichtfläche vorgesehen ist, deren Abstand voneinander gleich oder kleiner als der Innendurchmesser (32, DN) der Rohrleitung (205) ist, dadurch gekennzeichnet, daß beidseitig des Abschnitts kleineren Durchmessers als Dichtfläche mindestens eine ringförmige, rippenartige radiale Lippe (30, 31; 31a; 31b; 30h-p; 31a-p; 52, 53; 57, 58; 118, 119; 121, 122, 124; 204) vorgesehen ist, deren Höhe höchstens ein Fünftel bis ein Zehntel des Radius des Molchkörpers (11; 111: 200) im Bereich der Dichtlippe ist, wobei der Abstand des Molchkörpers (11; 111; 200) von der Rohrleitungswandung (205) im Bereich der Dichtlippe etwa dem 0,5 bis 0,75-fachen der Höhe der Lippe entspricht und die Dichtlippe so geformt und bemessen ist, daß sie beim Eingriff mit der Rohrwandung (205) so um- bzw. abgebogen wird, daß die zugewandte Kante und die Seitenfläche der Dichtlippe mit der Rohrwandung (205) in Eingriff tritt, vom Molchkörper (11; 111; 200) jedoch noch einen Abstand aufweist.

2. Rohrleitungsmolch mit einem länglichen Molchkörper aus vorzugsweise elastomerem Vollmaterial, bei dem beidseitig eines Abschnitts mit kleinerem Durchmesser jeweils mindestens eine ringförmige Dichtfläche vorgesehen ist, deren Abstand voneinander gleich oder kleiner als der Innendurchmesser der Rohrleitung ist, dadurch gekennzeichnet, daß beidseitig des Abschnitts kleineren Durchmessers als Dichtfläche mindestens eine ringförmige, rippenartige radiale Lippe (310, 311) vorgesehen ist, der Molchkörper im Bereich angrenzend an die Dichtlippe (310, 311) zylindrisch (306, 307) geformt ist, die Höhe der Dichtlippe (310, 311) etwa das 1,5-fache bis das Doppelte des Abstands der Rohrleitungswandung vom zylindrischen Abschnitt (306, 307) ist, die radiale Dichtlippe (310, 311) im axialen Abstand zu einer einteilig angeformten axial weiter außen liegenden ringförmigen Führungsfläche (301, 304) angeordnet ist, deren Durchmesser annähernd dem Durchmesser der Rohrleitungswandung entspricht und der Abstand zwischen Dichtlippe (310, 311) und Führungsfläche (301, 304) mindestens so groß ist, daß die Dichtlippe (310, 311) beim Umbiegen nicht gegen die ringförmige Führungsfläche (301, 304) stößt.

3. Rohrleitungsmolch nach Anspruch 2, dadurch gekennzeichnet, daß zwischen der ringförmigen Führungsfläche (301, 304) und der Dichtlippe (311) ein ringförmiger Aufnahmeraum (314, 315) für die umgebogene Dichtlippe (310, 311) gebildet ist.

4. Rohrleitungsmolch nach Anspruch 1, dadurch gekennzeichnet, daß bei einer Nennweite der Rohrleitung (205) von 50 bis 80 mm die Höhe der Dichtlippe (204) etwa 3 bis 5 mm beträgt und bei höheren Nennweiten nur geringfügig größer ist.

5. Rohrleitungsmolch nach einem der Ansprüche 1 bis 4, dadurch gekennzeichnet, daß die Dichtlippe (204) einteilig am Molchkörper (200) angeformt ist.

6. Rohrleitungsmolch nach Anspruch 5, dadurch gekennzeichnet, daß der Molchkörper (200) aus einem elastomeren relativ harten Material besteht.

7. Rohrleitungsmolch nach einem der Ansprüche 1 bis 4, dadurch gekennzeichnet, daß die Dichtlippe (30, 31; 31a; 31b; 30h-p; 31a-k; 52, 53; 57, 58; 118, 119; 121-124; 310, 311) an einem getrennten ringförmigen Dichtungselement (20, 21, 20a-p; 119a; 119b; 308, 309) geformt ist, das in einer Ringnut (17, 18; 17a-17p; 116, 117; 117a) des Molchkörpers (11; 111; 300) angeordnet ist.

8. Rohrleitungsmolch nach Anspruch 7, dadurch gekennzeichnet, daß das Dichtungselement (20, 21; 20a; 20k; 20m; 20n; 20o; 118, 119; 119a, 119b) lösbar in der Ringnut (17, 18) angeordnet ist.

9. Rohrleitungsmolch nach Anspruch 7 oder 8, dadurch gekennzeichnet, daß das ringförmige Dichtungselement (20, 21; 20a-p; 119a; 119b; 308, 309) aus elastomerem Material besteht.

10. Rohrleitungsmolch nach Anspruch 7, dadurch gekennzeichnet, daß die Dichtungselemente (52, 53, 308, 309) als Ringscheiben gebildet sind.

11. Rohrleitungsmolch nach einem der Ansprüche 8 bis 10, dadurch gekennzeichnet, daß das ringförmige Dichtungselement (308, 309) bei der Herstellung in das Material des Molchkörpers (300) eingebettet, vorzugsweise eingegossen ist.

12. Rohrleitungsmolch nach einem der Ansprüche 1 bis 11, dadurch gekennzeichnet, daß zwei oder mehr Dichtlippen (30, 31; 52, 53; 30h, 31h; 30k, 31k; 30m, 31m, 30n, 31n; 20o; 121, 122) nebeneinander vorgesehen sind, die so angeordnet und geformt sind, daß sie bei einer Verformung durch die Rohrleitungswandung (205) einander nicht berühren.

13. Rohrleitungsmolch nach einem der Ansprüche 7 bis 12, dadurch gekennzeichnet, daß die Ringnuten (17, 18; 17a, b; 50, 51; 17h-m; 17o; 17p) im Querschnitt rechteckförmig sind.

14. Rohrleitungsmolch nach einem der Ansprüche 7 bis 12, dadurch gekennzeichnet, daß die Ringnuten (17c; 17f; 17g; 17n; 116, 117; 117a) einen Hinterschnitt aufweisen.

15. Rohrleitungsmolch nach einem der Ansprüche 7 bis 12, dadurch gekennzeichnet, daß die Innenseite des Dichtungselements (20) als schwache Hohlkehle (26) geformt ist.

16. Rohrleitungsmolch nach einem der Ansprüche 7 bis 15, dadurch gekennzeichnet, daß die ringförmigen Dichtungselemente (20, 21, 20a, 20h, 20k, 20m, 20n, 20o) eine Umfangsnut (28, 28a, 28h, 28k, 28m, 28n, 28o) aufweisen, in dem ein ringförmiges Befestigungselement (29, 29a, 52k, 61, 62, 64, 67) aufgenommen ist, dessen Außendurchmesser vorzugsweise kleiner ist als der des Molchkörpers im angrenzenden Bereich.

17. Rohrleitungsmolch nach einem der Ansprüche 7 bis 15, dadurch gekennzeichnet, daß das Dichtungselement (20d) an den Stirnseiten eine Umfangsnut (40) aufweist, die ein ringförmiges Sicherungselement (41) aufnimmt, das mit einer Sicherungsnut (42) in der Wandung der ringförmigen Aufnahmenut (17d) im Molchkörper (11) zusammenwirkt.

18. Rohrleitungsmolch nach einem der Ansprüche 7 bis 17, dadurch gekennzeichnet, daß zwischen der Innenseite des ringförmigen Dichtungselements (20e) und dem Boden der ringförmigen Nut (17e) im Molchkörper (11) mindestens ein Draht (43) angeordnet ist.

19. Rohrleitungsmolch nach einem der Ansprüche 7 bis 18, dadurch gekennzeichnet, daß das ringförmige Dichtungselement (20f, 20g) an der Innenseite eine ringförmige Ausnehmung (44; 44g) aufweist, die über mindestens einen Kanal (45; 45g) mit der Außenseite des Dichtungselements außerhalb des Molchkörpers (11) in Verbindung steht.

20. Rohrleitungsmolch nach einem der Ansprüche 7 bis 19, dadurch gekennzeichnet, daß der in der Ringnut (17, 18; 17a-p; 116, 117; 117a) einsitzende Halteabschnitt (25; 25a-p) des Dichtungselements (20, 21; 20a-p; 119a, 119b) eine größere axiale Ausdehnung aufweist als der radial weiter außen liegende Dichtungsabschnitt.

21. Rohrleitungsmolch nach Anspruch 10,dadurch gekennzeichnet, daß bei zwei benachbarten Ringscheiben (52, 53) der dazwischenliegende Molchkörperabschnitt eine Sicherungsnut (54) aufweist, die sich radial nach innen verjüngt und in der ein ringförmiges Sicherungselement (55) unter radialer Spannung einsitzt.

22. Rohrleitungsmolch nach einem der Ansprüche 1 bis 21, dadurch gekennzeichnet,daß an der Innenseite des ringförmigen Dichtungselements (20h) ein Metallband (46), vorzugsweise aus unmagnetischem Stahl, angebracht ist, vorzugsweise durch Vulkanisation.

23. Rohrleitungsmolch nach einem der Ansprüche 1 bis 22, dadurch gekennzeichnet, daß die Dichtungselemente (20k, 57, 58, 20o) aus schwachelastischem bzw. unelastischem Material bestehen und ein Federelement (51, 59, 60, 66) mit den Dichtungselementen so zusammenwirkt, daß sie in die Ruhelage vorgespannt sind.

24. Rohrleitungsmolch nach den Ansprüchen 16 und 23, dadurch gekennzeichnet, daß ein im Querschnitt U-förmiges Federelement (51) in der Nut (28k) angeordnet ist, dessen Schenkel mit der Innenseite der Dichtungsabschnitte (30k, 31k) zusammenwirken.

25. Rohrleitungsmolch nach den Ansprüchen 16 und 23, dadurch gekennzeichnet, daß in der Ringnut (171) des Molchkörpers (11) zwei im Querschnitt U-förmige Dichtungselemente (57, 58) ineinander genestet angeordnet sind und jeweils ein im Querschnitt U-förmiges ringförmiges Federelement (59 bzw. 60) zwischen den Dichtungselementen bzw. an der Innenseite des inneren Dichtungselements angeordnet sind.

26. Rohrleitungsmolch nach Anspruch 23,dadurch gekennzeichnet, daß ein ringförmiges U-förmiges Federelement (66) in das Dichtungselement (20o) eingeformt ist.

27. Rohrleitungsmolch nach einem der Ansprüche 1 bis 26, dadurch gekennzeichnet, daß in die Dichtlippe (30p) mindestens eine vom Umfang her eingeformte radiale Ausnehmung (70) vorgesehen ist.

28. Rohrleitungsmolch nach einem der Ansprüche 1 bis 27, dadurch gekennzeichnet, daß die Dicke der Dichtlippe (30, 31; 31a-n, 20o; 118, 119) radial nach außen stetig abnimmt.

29. Rohrleitungsmolch nach einem der Ansprüche 1 bis 27, dadurch gekennzeichnet, daß die Dicke der Dichtlippe (204) radial nach außen stetig zunimmt.

30. Rohrleitungsmolch nach einem der Ansprüche 1 bis 23, dadurch gekennzeichnet, daß die Dichtlippe als Bürste (50) ausgebildet ist.

31. Rohrleitungsmolch nach einem der Ansprüche 8 bis 30, dadurch gekennzeichnet, daß die Dichtungselemente (20, 21; 20a-o; 119a; 119b) ringförmig geschlossen sind.

32. Rohrleitungsmolch nach einem der Ansprüche 8 bis 31, dadurch gekennzeichnet, daß die Dichtungselemente (25b) aus Abschnitten eines Strangmaterials geformt sind, wobei die Abschnittsenden einander überlappend oder auf Stoß miteinander verbunden sind.

33. Rohrleitungsmolch nach einem der Ansprüche 7 bis 32, dadurch gekennzeichnet, daß der Molchkörper (11; 200; 300) einteilig aus elastomerem Werkstoff geformt ist.

34. Rohrleitungsmolch nach einem der Ansprüche 1 bis 33, dadurch gekennzeichnet, daß der Molchkörper (111) aus zwei rotationssymmetrischen Endabschnitten (112, 113) besteht sowie einem Mittelabschnitt (114), der einander zugekehrten beschnitte der Endabschnitte (112, 113) ringförmig umgibt, wobei die Aufnahmenut für die Dichtungselemente (118, 119; 119a; 119b) jeweils zwischen dem Mittelabschnitt (114) und einem Endabschnitt (112 bzw. 113) gebildet ist.

35. Rohrleitungsmolch nach einem der Ansprüche 7 bis 33, dadurch gekennzeichnet, daß der Boden der Aufnahmenut (17) mindestens eine Ausnehmung (22) aufweist, in dem ein Permanentmagnet (24) angeordnet ist.

36. Rohrleitungsmolch nach Anspruch 35,dadurch gekennzeichnet, daß mehrere Permanentmagneten (24) in den beiden Ringnuten (17, 18) so angeordnet sind, daß sich ein Magnetfeld außerhalb des Molchkörpers (11) zwischen diesen aufbaut.

37. Rohrleitungsmolch nach Anspruch 36,dadurch gekennzeichnet, daß die Permanentmagneten (24) in das Material des Molchkörpers eingebettet, vorzugsweise eingegossen sind.

## Claims

1. A pipeline scraper comprising an elongated scraper body (11, 111, 200) of preferably elastomeric solid material, having at least one annular sealing surface on both sides of a section having a smaller diameter, the distance between said sealing surfaces being equal to or smaller than the internal diameter (32, DN) of said pipeline (205), characterized in that on both sides of said section having a smaller diameter, at least one annular ridge-like, radial lip (30, 31; 31a; 31b; 30h-p; 52,53; 57,58; 118,119; 124; 204) is provided which has a height which is at most a fifth to a tenth of the radius of said scraper body (11; 111; 200) in the area of said sealing lip, with the distance of said scraper body (11; 111; 200) from the pipeline wall (205) in the area of said sealing lip corresponding to the 0.5 to 0.75-fold of the height of said lip, and that said sealing lip is formed and dimensioned such that upon getting into contact with said pipeline wall (205) it is deflected and bent-off, respectively, such that the associated edge and the lateral face of said sealing lip get into contact with said pipeline wall (205), however, still leaving a space to said scraper body (11; 111; 200).

2. A pipeline scraper comprising an elongated scraper body of preferably elastomeric solid material having at least one annular sealing surface on both sides of a section having a smaller diameter, the distance between the sealing surface being equal to or smaller than the inner diameter of said pipeline, characterized in that on both sides of said section having a smaller diameter at least one annular ridge-like radial lip (310, 311) is provided as sealing surface, that the scraper body is cylindrically (306, 307) formed adjacent the sealing lip (310, 311), that the height of the sealing lip (310, 311) is about 1.5 to 2.0-fold of the distance of the pipeline wall from the cylindrical portion (306, 307), that the radial sealing lip (310, 311) is located in an axial distance from an integrally formed annular guiding face (301, 304) which is provided axially further outwardly, having a diameter approximately corresponding to the diameter of the pipeline, wherein the distance between the sealing lip (310, 311) and the guiding face (301, 304) is selected to be at least that large that the sealing lip indeflecting does not engage the annular guiding face (301, 304).

3. The pipeline scraper according to claim 2, characterized in that an annular receiving space (314, 315) for the accomodation of said deflecting sealing lip (310, 315) is provided between said annular guiding surface (301, 304) and said sealing lip (311).

4. The pipeline scraper according to claim 1, characterized in that the height of the sealing lip (204) is about 3 to 5 mm for a nominal width of said pipeline (205) of 50 to 80 mm, said height only slightly larger for larger nominal widths.

5. The pipeline scraper according to one of the claims 1 to 4, characterized in that said sealing lip (204) is integrally formed with said scraper body (200).

6. The pipeline scraper according to claim 5, characterized in that said scraper body (200) consists of an elastomeric, relatively hard material.

7. The pipeline scraper according to one of the claims 1 to 4, characterized in that said sealing lip (30,31;31a,31b;30h-p;31a-k;52,53;57,58;118,119;121-124;310,311) is formed on a separate, annular sealing element (20,21;20a-p;119a;119b:308,309) which is located in an annular groove (17,18;17a-17p;116,117;117a) of said scraper body (11;111;200).

8. The pipeline scraper according to claim 7, characterized in that said sealing (20,21;20a;20k;20m;20n;200,118,119;119a,119b), is detachably located in said annular groove (17,18).

9. The pipeline scraper according to claim 7 or 8, characterized in that said annular sealing ele-ment (20,21;20a-p;119a;119b;308,309) consists of elastomeric material.

10. The pipeline scraper according to claim 7, characterized in that said sealing elements (52,53;308,309) are formed as ring discs.

11. The pipeline scraper according to one of claims 8 to 10, characterized in that said annular sealing element (308,309) is embedded into the material of said scraper body (300) during production, preferably by casting.

12. The pipeline scraper according to one of claims 1 to 11, characterized in that two or more of said sealing lips (30,31;52,53;30h,31h;30k,31k;30m,31m;30n,31n;200;121,122) are provided arranged side-by-side and formed such that they do not touch each other upon a deflection by said pipeline wall.

13. The pipeline scraper according to one of claims 7 to 12, characterized in that said annular grooves (17,18;17a,b;50,51;17h-m;17o;17p) are rectangular in cross section.

14. The pipeline scraper according to one of claims 7 to 12, characterized in that said annular grooves (17c;17f;17g;17n,116,117;117a) have an undercut.

15. The pipeline scraper according to one of claims 7 to 12, characterized in that the inner side of said sealing element (20) is formed with a slight groove (26).

16. The pipeline scraper according to one of claims 7 to 15, characterized in that said annular sealing elements (20,21;20a,20h,20k,20m,20n,20o) have a circumferential groove (28,28a,28h,28k,28m,28n,28o) into which an annular fastener (29,29a,52k,61,62,64,67) is inserted, having an outer diameter preferably smaller than the outer diameter of said scraper body in the adjacent region.

17. The pipeline scraper according to one of claims 7 to 15, characterized in that said sealing element (20d) has said circumferential groove (40) on the front sides which receives an annular securing element (41) coacting with a securing groove (42) in the wall of the annular receiving groove (17d) in said scraper body (11).

18. The pipeline scraper according to one of claims 7 to 17, characterized in that at least one wire (43) is located in said scraper body (11) between the inner side of said annular sealing element (20e) and the bottom of said annular groove (17e).

19. The pipeline scraper according to one of claims 7 to 18, characterized in that said sealing element (20f,20g) on the inner side has an annular clearance (44,44g) which communicates with the outer side of said sealing element outside of the scraper body (11) by at least one passage (45,45g).

20. The pipeline scraper according to one of claims 7 to 19, characterized in the supporting section (25;25a-p) of said sealing element (20,21;20a-p;119a,119b) inserted in said annular groove (17,18;17a-p;116,117;117a) has a larger axial extension than said sealing section located radially further outside.

21. The pipeline scraper according to claim 10, characterized in that scraper body section located between a pair of adjacent ring discs (52,53) has said securing groove (54) which tapers radially inwards and into which said annular securing element (55) is inserted under radial tension.

22. The pipeline scraper according to one of claim 1 to 21, characterized in that a metal band (46) preferably of non-magnetic steel is fixed on the inner side of said annular sealing element (20h), preferably by vulcanization.

23. The pipeline scraper according to one of claim 1 to 22, characterized in that said sealing elements (20k;57,58;20o) consist of weakly elastic and non-elastic material, respectively, and a spring element (51,59,60,66) co-acts with said sealing elements such that they are biased towards their neutral position.

24. The pipeline scraper according to claims 16 and 23, characterized in that a spring element (51) U-shaped in cross section is located within said groove (28k) and the legs of said spring element co-acting with the inner sides of said sealing sections (30k,31k).

25. The pipeline scraper according to claims 16 and 23, characterized in that two of said sealing elements (57,58) U-shaped in cross section are nested one within the other and are located in said annular groove (171) of said scraper body (11) and each one of said annular spring elements (59 or 60) U-shaped in cross section is located between said sealing elements and on the inner side of said inner sealing element, respectively.

26. The pipeline scraper according to claim 23, characterized in that said annular U-shaped spring element (66) is formed in said sealing element (20o).

27. The pipeline scraper according to one of claims 1 to 26, characterized in that at least one radial recess (70) is formed in the circumference of said sealing lip (30p).

28. The pipeline scraper according to one of claim 1 to 27, characterized in that the thickness of said sealing lip (30,31;31a-n;20o;118,119) is continuously reduced radially outwards.

29. The pipeline scraper according to one of claims 1 to 27, characterized in that the thickness of said sealing lip (204) is continuously increased radially outwards.

30. The pipeline scraper according to one of claim 1 to 23, characterized in that said sealing lip is formed as a brush (50).

31. The pipeline scraper according to one of claims 8 to 30, characterized in that said sealing elements (20,21;20a-o;119a;119b) form a complete ring.

32. The pipeline scraper according to one of claims 8 to 31, characterized in that said sealing elements (25b) are formed of sections of stranded material, with the end sections overlapping or abutting each other.

33. The pipeline scraper according to one of claims 7 to 32, characterized in that said scraper body (11;200;300) is integrally formed of elastomeric material.

34. The pipeline scraper according to one of claims 1 to 33, characterized in that the scraper body (111) consists of a pair of end portions (112, 113) symmetrical in rotation and a center portion (114) which annularly encircles portions of said end portions (112, 113) facing each other, wherein the receiving groove for the sealing elements (118, 119, 119a, 119b) is formed each between the central portion (114) and one of said end portions (112, 113).

35. The pipeline scraper according to one of claims 7 to 33, characterized in that the bottom of said receiving groove (17) has at least one recess (22) in which a permanent magnet (24) is located.

36. The pipeline scraper according to claim 35, characterized in that a plurality of said permanent magnets (24) is located in both of said annular grooves (17,18), such that a magnetic field is provided between said grooves outside said scraper body (11).

37. The pipeline scraper according to claim 36, characterized in that permanent magnets (24) are embedded into the material of said scraper body, preferably by casting.

## Revendications

1. Racleur pour conduite avec un corps de racleur oblong (11; 111; 200) constitué de préférence d'un matériau massif élastomère, sur lequel est prévue, des deux côtés d'un segment d'un diamètre plus petit, chaque fois au moins une surface d'étanchéité annulaire, dont l'écartement l'un de l'autre est égal ou plus petit que le diamètre intérieur (32, DN) de la conduite (205), caractérisé en ce qu'au moins une lèvre (30, 31; 31a; 31b; 30h-p; 31a-p; 52, 53; 57, 58; 118, 119; 121, 122, 124; 204) radiale, annulaire, du type d'une nervure, est prévue, des deux côtés du segment de diamètre plus petit, en tant que surface d'étanchéité, dont la hauteur est au maximum comprise entre un cinquième à un dixième du rayon du corps de racleur (11; 111; 200) dans le secteur de la lèvre d'étanchéité, l'écartement du corps de racleur (11; 111; 200) par rapport à la paroi de la conduite (205) dans le secteur de la lèvre d'étanchéité correspondant sensiblement à 0,5 voire 0,75 fois la hauteur de la lèvre, et la lèvre d'étanchéité étant formée et dimensionnée de manière telle, qu'en entrant en contact avec la paroi de la conduite (205), elle est cintrée ou pliée de manière telle, que l'arête tournée vers celle-ci et la surface latérale de la lèvre d'étanchéité vient en contact avec la paroi de la conduite (205), mais présente toutefois un écartement par rapport au corps de racleur (11; 111; 200).

2. Racleur pour conduite avec un corps de racleur oblong constitué de préférence d'un matériau massif élastomère, sur lequel est prévue, des deux côtés d'un segment d'un diamètre plus petit, chaque fois au moins une surface d'étanchéité annulaire, dont l'écartement l'un de l'autre est égal ou plus petit que le diamètre intérieur de la conduite, caractérisé en ce qu'au moins une lèvre (310, 311) radiale, annulaire, du type d'une nervure, est prévue des deux côtés du segment de diamètre plus petit, en tant que surface d'étanchéité, le corps de racleur dans le secteur adjacent de la lèvre d'étanchéité (310, 311) étant de forme cylindrique (306, 307), la hauteur de la lèvre d'étanchéité (310, 311) étant comprise entre conduite par rapport au segment cylindrique (306, 307), la lèvre d'étanchéité (310, 311) radiale, étant disposée selon un écartement axial par rapport à une surface de guidage annulaire (301, 304), formée d'un seul tenant, axiale, située plus à l'extérieur, dont le diamètre correspond approximativement au diamètre de la paroi de la conduite et l'écartement entre la lèvre d'étanchéité (310, 311) et la surface de guidage (301, 304) étant de taille telle, que la lèvre d'étanchéité (310, 311) lors du cintrage ne vient pas heurter la surface de guidage annulaire (301, 304).

3. Racleur pour conduite selon la revendication 2, caractérisé en ce qu'un espace de logement annulaire (314, 315) pour la lèvre d'étanchéité (310, 311) cintrée est formé entre la surface de guidage annulaire (301, 304) et la lèvre d'étanchéité (311).

4. Racleur pour conduite selon la revendication 1, caractérisé en ce que, pour un diamètre nominal de la conduite (205) de 50 à 80 mm, la hauteur de la lèvre d'étanchéité (204) est d'environ 3 à 5 mm et est seulement légèrement plus grande pour des diamètres nominaux plus élevés.

5. Racleur pour conduite selon l'une quelconque des revendications 1 à 4, caractérisé en ce que la lèvre d'étanchéité (204) est formée d'un seul tenant sur le corps de racleur (200).

6. Racleur pour conduite selon la revendication 5, caractérisé en ce que le corps de racleur (200) est constitué d'un matériau élastomère relativement dur.

7. Racleur pour conduite selon l'une quelconque des revendications 1 à 4 , caractérisé en ce que la lèvre d'étanchéité (30, 31; 31a; 31b; 30h-p; 31a-k; 52, 53; 57, 58; 118, 119; 121-124; 310, 311) est formée sur un élément d'étanchéité annulaire (20, 21, 20a-p; 119a; 119b; 308, 309), séparé, qui est monté dans une rainure annulaire (17, 18; 17a-17p; 116, 117; 117a) du corps de racleur (11; 111; 300).

8. Racleur pour conduite selon la revendication 7, caractérisé en ce que l'élément d'étanchéité (20, 21, 20a; 20k; 20m; 20n; 20o; 118, 119a; 119b) est monté de manière amovible dans la rainure annulaire (17, 18).

9. Racleur pour conduite selon l'une quelconque des revendications 7 ou 8, caractérisé en ce que l'élément d'étanchéité annulaire (20, 21, 20a-p; 119a; 119b; 308, 309), est constitué d'un matériau élastomère.

10. Racleur pour conduite selon la revendication 7, caractérisé en ce que les éléments d'étanchéité (52, 53, 308, 309) sont conçus comme des disques annulaires.

11. Racleur pour conduite selon l'une quelconque des revendications 8 à 10, caractérisé en ce que l'élément d'étanchéité annulaire (308, 309), est enrobé, de préférence coulé, lors de la fabrication, dans le matériau du corps de racleur (300).

12. Racleur pour conduite selon l'une quelconque des revendications 1 à 11, caractérisé en ce que deux lèvres d'étanchéité (30, 31; 52, 53; 30h; 31h; 30k; 31k; 30m, 31m, 30n; 31n; 20o; 121, 122) ou plus, sont prévues les unes à côté des autres, qui sont disposées et formées de manière telle, qu'elles ne se touchent pas les unes les autres dans le cas d'une déformation par la paroi de la conduite (205).

13. Racleur pour conduite selon l'une quelconque des revendications 7 à 12, caractérisé en ce que les rainures annulaires (17, 18; 17a, b; 50, 51; 17h-m; 17o; 17p) ont une section transversale rectangle.

14. Racleur pour conduite selon l'une quelconque des revendications 7 à 12, caractérisé en ce que les rainures annulaires (17c; 17f; 17g; 17n; 116, 117; 117a) présentent une découpe arrière.

15. Racleur pour conduite selon l'une quelconque des revendications 7 à 12, caractérisé en ce que la partie intérieure de l'élément d'étanchéité (20) à la forme d'une mince canelure (26).

16. Racleur pour conduite selon l'une quelconque des revendications 7 à 15, caractérisé en ce que les éléments d'étanchéité (20, 21, 20a, 20h, 20k, 20m, 20n, 20o) présentent une rainure périphérique (28, 28a, 28h, 28k, 28m, 28n, 28o), dans laquelle est logé un élément de fixation annulaire (29, 29a, 52k, 61, 62, 64, 67), dont le diamètre extérieur est de préférence plus petit que celui du corps de racleur dans le secteur adjacent.

17. Racleur pour conduite selon l'une quelconque des revendications 7 à 15, caractérisé en ce que l'élément d'étanchéité (20d) présente sur les parties frontales une rainure périphérique (40), qui reçoit un élément de sûreté annulaire (41), qui agit conjointement avec une rainure de sûreté (42) dans la paroi de la rainure réceptrice annulaire (17d) dans le corps de racleur (11).

18. Racleur pour conduite selon l'une quelconque des revendications 7 à 17, caractérisé en ce qu'au moins un fil (43) est disposé entre le côté intérieur de l'élément d'étanchéité annulaire (20e) et le fond de la rainure annulaire (17e) dans le corps de racleur (11).

19. Racleur pour conduite selon l'une quelconque des revendications 7 à 18, caractérisé en ce que l'élément d'étanchéité annulaire (20f, 20g) présente sur le côté intérieur un évidement annulaire (44; 44g), qui est en liaison avec le côté extérieur de l'élément d'étanchéité en dehors du corps de racleur (11), par l'intermédiaire d'au moins un canal (45; 45g).

20. Racleur pour conduite selon l'une quelconque des revendications 7 à 19, caractérisé en ce que le segment de retenue (25; 25 a-p) de l'élément d'étanchéité (20, 21; 20a-p; 119a, 119b) reposant dans la rainure annulaire (17, 18; 17a-p; 116, 117; 117a) présente une extension axiale plus grande que le segment d'étanchéité situé, dans le sens radial, plus vers l'extérieur.

21. Racleur pour conduite selon la revendication 10, caractérisé en ce que sur deux disques annulaires (52, 53) voisins, le segment du corps de racleur intermédiaire présente une rainure de sûreté (54), qui se rétrécit vers l'intérieur, dans le sens radial, et dans laquelle est logé'sous tension radiale un élément de sûreté annulaire (55).

22. Racleur pour conduite selon l'une quelconque des revendications 1 à 21, caractérisé en ce qu'une bande de métal (46); constituée de préférence d'acier non-magnétique, est apposée sur le côté intérieur de l'élément d'étanchéité annulaire (20h), de préférence par vulcanisation.

23. Racleur pour conduite selon l'une quelconque des revendications 1 à 22, caractérisé en ce que les éléments d'étanchéité (20k, 57, 58, 20o) sont constitués de matériau faiblement élastique ou non élastique et un élément formant ressort (51, 59, 60, 66) coopère avec les éléments d'étanchéité, de manière à ce qu'ils soient tendus en position de repos.

24. Racleur pour conduite selon les revendications 16 et 23, caractérisé en ce qu'un élément formant ressort (51), d'une section transversale en U, est monté dans la rainure (28k), dont les montants coopèrent avec le côté intérieur des segments d'étanchéité (30k, 31k).

25. Racleur pour conduite selon les revendications 16 et 23, caractérisé en ce que deux éléments d'étanchéité (57, 58), de section en U, emboîtés l'un dans l'autre, sont montés dans la rainure annulaire (171) du corps de racleur (11) et un élément formant ressort (59 ou 60), de section en U, est monté chaque fois respectivement entre les éléments d'étanchéité ou sur le côté intérieur de l'élément d'étanchéité intérieur.

26. Racleur pour conduite selon la revendication 23, caractérisé en ce qu'un élément annulaire formant ressort (66), en forme de U, est formé dans l'élément d'étanchéité (20o).

27. Racleur pour conduite selon l'une quelconque des revendications 1 à 26, caractérisé en ce qu'au moins un évidement radial (70) formé depuis la périphérie, est prévu dans la lèvre d'étanchéité (30p).

28. Racleur pour conduite selon l'une quelconque des revendications 1 à 27, caractérisé en ce que l'épaisseur de la lèvre d'étanchéité (30, 31; 31a-n; 20o; 118, 119) décroît de manière constante vers l'extérieur, dans le sens radial.

29. Racleur pour conduite selon l'une quelconque des revendications 1 à 27, caractérisé en ce que l'épaisseur de la lèvre d'étanchéité (204) croît de manière constante vers l'extérieur, dans le sens radial.

30. Racleur pour conduite selon l'une quelconque des revendications 1 à 23, caractérisé en ce que la lèvre d'étanchéité est conformée comme brosse (50).

31. Racleur pour conduite selon l'une quelconque des revendications 8 à 30, caractérisé en ce que les éléments d'étanchéité (20, 21; 20 a-o; 119a; 119b) sont fermés comme un anneau.

32. Racleur pour conduite selon l'une quelconque des revendications 8 à 31, caractérisé en ce que les éléments d'étanchéité (25b) sont formés à partir de segment d'un matériaux du genre corde, les extrémités des segments se chevauchant ou étant reliées les unes aux autres par poussée.

33. Racleur pour conduite selon l'une quelconque des revendications 7 à 32, caractérisé en ce que le corps de racleur (11; 200; 300) est formé d'un seul tenant en matériau élastomère.

34. Racleur pour conduite selon l'une quelconque des revendications 1 à 33, caractérisé en ce que le corps de racleur (111) est constitué de deux segments d'extrémité (112, 113), symétriques en rotation ainsi que d'un segment médian (114), qui entoure à la manière d'un anneau des segments d'extrémités (112, 113) tournés l'un vers l'autre, la rainure recevant les éléments d'étanchéité (118, 119; 119a; 119b) étant formée chaque fois entre le segment médian (114) et un segment d'extrémités (112 ou 113).

35. Racleur pour conduite selon l'une quelconque des revendications 7 à 33, caractérisé en ce que le fond de la rainure réceptrice (17) présente au moins un évidement (22), dans lequel est monté un aimant permanent (24).

36. Racleur pour conduite selon la revendication 35, caractérisé en ce que plusieurs aimants permanents (24) sont disposés de manière telle, dans les deux rainures annulaires (17, 18), qu'un champ magnétique se crée entre ceux-ci, en dehors du corps de racleur (11).

37. Racleur pour conduite selon la revendication 36, caractérisé en ce que les aimants permanents (24) sont enrobés, de préférence coulés, dans le matériau du corps de racleur.
